# EUROPÄISCHE PATENTANMELDUNG

(11) **EP 1 175 817 A1**
(43) Veröffentlichungstag der Anmeldung: **30.01.2002**
(21) Anmeldenummer: 01111724.9
(22) Anmeldetag: 15.05.2001
(51) Int. Cl.: A01B 59/041

(54) **Vorrichtung zur hydraulischen Steuerung der Unterlenker eines Schleppers**

(30) Priorität: 24.07.2000 DE 10036188
(71) Anmelder: Evesque, Christian, 73275 Ohmden (DE)
(72) Erfinder: Evesque, Christian, 73275 Ohmden (DE)
(74) Vertreter: COHAUSZ HANNIG DAWIDOWICZ & PARTNER

(57) **Zusammenfassung**

Die Erfindung betrifft eine Vorrichtung zur hydraulischen Steuerung der beiden Unterlenker 1 einer Geräteanbaueinrichtung eines Fahrzeugs, insbesondere eines Schleppers, umfassend zwei jeweils einem Unterlenker 1 zugeordnete Seitenstreben 2, die jeweils von einer durch erste Anschläge 11 begrenzten Minimallänge L1 bis zu einer durch zweite Anschläge 12 begrenzten Maximallänge L2 über eine Differenzlänge längenveränderbar sind, wobei jede Seitenstrebe 2 einen Hydraulikzylinder 3 und ein elastisches Rückstellelement 4 aufweist. Jeder Hydraulikzylinder 3 ist mit einer äußeren Stufe 7 und mindestens einer inneren bzw. mittleren Stufe 5, 6 mehrstufig ausgeführt ist, wobei der Gesamthub des Hydraulikzylinders 3 gleich der Differenzlänge der jeweiligen Seitenstrebe 2 ist. Die Stufen 5, 6, 7 der Hydraulikzylinder 3 sind derart ausgebildet sind, daß bei jeweils vollständig ausgefahrener äußerer Stufe 7 und bei jeweils vollständig eingefahrener innerer Stufe 5 und bei vollständig eingefahrenen gegebenenfalls vorhandener mittlerer Stufen 6 der Abstand A3 zwischen den freien Enden der beiden Unterlenker 1 einer ersten Standardbreite K3 verschiedener anzubauender Geräte G entspricht.

## Beschreibung

Die Erfindung betrifft eine Vorrichtung zur hydraulischen Steuerung der beiden Unterlenker einer Geräteanbaueinrichtung eines Fahrzeugs, insbesondere eines Schleppers, umfassend zwei jeweils einem Unterlenker zugeordnete Seitenstreben, die jeweils von einer durch einen ersten Anschlag begrenzten Minimallänge bis zu einer durch einen zweiten Anschlag begrenzten Maximallänge über eine Differenzlänge längenveränderbar sind, wobei jede Seitenstrebe einen Hydraulikzylinder und ein elastisches Rückstellelement aufweist.

Derartige Vorrichtungen sind an landwirtschaftlichen oder forstwirtschaftlichen Fahrzeugen, insbesondere an Traktoren allgemein bekannt. Ursprünglich wurden Vorrichtungen zum Stabilisieren der Unterlenker einer Dreipunktkupplung an einem Schlepper verwendet, die ohne Hydraulik rein mechanisch arbeiten. Diese bekannten Vorrichtungen bestehen üblicherweise aus einer oder zwei mechanischen Streben, die in einer zuvor manuell festgelegten Länge ein seitliches Verschwenken der Unterlenker und eines ggf. angehängten Gerätes blockieren können. Durch manuelles Lösen der Streben kann der Freigang, d. h. die freie Schwenkbarkeit der Unterlenker mit dem ggf. angekuppelten Gerät wieder hergestellt werden.

Die Handhabung derartiger Vorrichtungen ist sehr schwierig und mühsam und erfordert insbesondere dann ein Aussteigen des Fahrers aus dem Schlepper oder die manuelle Mithilfe einer zweiten Person, wenn die Spreizbreite der Unterlenker an ein Gerät mit einer abweichenden Kategoriebreite angepaßt werden muß, oder wenn die beiden Strebenlängen beidseitig verstellt werden müssen, um eine neue seitliche Lage des angehängten Gerätes einzustellen, zum Beispiel beim Spargelanbau. In gleicher Weise ist eine derartige Seitenverstellung auch verbunden mit einer erneut notwendigen Rückverstellung der Strebenlängen, um das Gerät möglichst genau zentriert zur Schlepperlängsachse mit möglichst geringem Spiel festzustellen, was insbesondere beim Fahrbetrieb des Schleppers erforderlich ist.

Ferner ist die Verwendung von Ketten bekannt, die die Beweglichkeit der Unterlenker jedoch nur in einer Schwenkrichtung blockieren können.

Zur Vermeidung dieser Nachteile und insbesondere zur Erhöhung des Bedienungskomforts wurden verschiedene Vorrichtungen vorgeschlagen, die mit Hydraulikzylindern arbeiten. So ist beispielsweise aus der österreichischen Patentschrift Nr. 272721 eine Vorrichtung zur hydraulischen Steuerung der beiden Unterlenker eines Schleppers bekannt, die insbesondere eine kontrollierte Schwenkbewegung eines einzelnen Unterlenkers unabhängig von dem zweiten Unterlenker ermöglicht. Auf diese Weise kann sowohl das Ankuppeln eines Gerätes als auch das Schwenken eines angekuppelten Gerätes in eine gewünschte Seitenlage bequem von einer Person vom Schleppersitz aus durchgeführt werden.

Ferner ist es aus dieser Patentschrift bekannt, die Zylinder der beiden Seitenstreben durch eine Verbindungsleitung leitungsmäßig miteinander zu verbinden. Die Verbindungsleitung ist dabei über eine absperrbare Speiseleitung mit einer als Druckquelle dienenden Ölpumpe verbunden. Bei Absperrung der Speiseleitung hält die in den Zylindern unter Druck stehende Hydraulikflüssigkeit die Unterlenker in ihrer Kupplungsstellung fest. Hierbei kann die Hydraulikflüssigkeit jedoch auch bei abgesperrter Speiseleitung noch frei von einem zum anderen Zylinder strömen, so daß eine seitliche Verschwenkmöglichkeit der Unterlenker und eines angekuppelten Gerätes erhalten bleibt.

Um diese freie Verschwenkmöglichkeit ausschalten und eine Stabilisierung erreichen zu können, wird in der AT 272721 vorgeschlagen, die Verbindungsleitung mit Absperrventilen für beide Zylinder auszuführen. Eine derartige Anordnung bietet neben der Unterbindung der freien seitlichen Verschwenkmöglichkeit eines angekuppelten Gerätes insbesondere auch den Vorteil, daß beide Unterlenker unabhängig voneinander in einer beliebigen Schwenkposition verriegelt werden können.

Bei einer derartigen Vorrichtung ist zwar die Stabilisierung eines angehängten Gerätes in einer zur Schlepperlängsachse mittig zentrierten Position grundsätzlich möglich. Sie erfordert jedoch eine manuelle Wechselbetätigung der Hydraulikventile und ein entsprechendes Augenmaß des Fahrers. Dadurch dauert die mittige Verriegelung des angehängten Gerätes relativ lange und kann auch bei größerem Zeitaufwand nicht eine absolut mittenzentrierte Position gewährleisten, was in bestimmten Fahrsituationen die Stabilität des Schleppers und somit die Sicherheit des Fahrers gefährden kann.

In dem deutschen Patent DE 195 37 555 wird eine hydraulische Vorrichtung vorgeschlagen, bei der ein angehängtes Gerät bei einer Hubbewegung der Unterlenker in einer zur Schlepperlängsachse mitten-zentrierten Position automatisch stabilisiert werden soll. Dazu werden als Hydraulikzylinder jeweils Plungerzylinder verwendet, die in der Stabilisierungsposition vollständig auf Block eingefahren sind. Das verbleibende Spiel muß zuvor über eine Gewindeverstellung manuell verringert werden. Dabei müssen beide Seitenstreben manuell verstellt werden, was für den Bediener mit erheblichem Aufwand verbunden ist. Außerdem muß dieser Aufwand bei jedem Wechsel der Kategoriebreite eines angekuppelten Gerätes erneut aufgebracht werden. Wird diese manuelle Längenverstellung der beiden Seitenstreben nicht durchgeführt, so kann es zu erheblichen Beschädigungen der Geräteanbaueinrichtung kommen. Beispielsweise bewirkt eine Verlängerung der Gewindeverstellung der Seitenstreben auf die Kategoriebreite eines schmaleren Gerätes bei der anschließenden Ankopplung eines anderen Gerätes einer größeren Kategoriebreite ohne eine erneute manuelle Anpassung der Gewindeverstellung im drucklosen Zustand der Zylinder eine unerwünscht starke seitliche Begrenzung des Freigangsbereiches der Unterlenker, was beispielsweise im Flugbetrieb zu einer seitlichen Überlastung und somit zum Bruch der Geräteanbaueinrichtung führen kann.

Um auch unabhängig von der Hubbewegung der Geräteanbaueinrichtung eine Mittenzentrierung des angebauten Gerätes erreichen zu können, wurde in der deutschen Patentschrift DE 197 44 327 eine hydraulische Stabilisierungsvorrichtung vorgeschlagen, die eine zweite Druckquelle umfaßt, die über ein zusätzliches Steuerventil eine Druckbeaufschlagung der Hydraulikzylinder der Seitenstreben unabhängig von einer Druckbeaufschlagung des hydraulischen Krafthebers durch die erste Druckquelle ermöglicht. Auf diese Weise kann zwar die Geräteanbaueinrichtung auch bei einer abgesenkten Position der Geräteanbaueinrichtung und insbesondere bei einer Seitenhanglage des Schleppers mittig stabilisiert werden, aber die zuvor genannten Nachteile der aus der DE 195 37 555 bekannten Vorrichtung treten auch hierbei auf.

Diese zuletzt genannten Nachteile treten außerdem auch bei der Verwendung von Seitenstreben auf, die aus der deutschen Patentschrift DE 197 44 328 bekannt sind. Auch hierbei ist eine manuelle Längenverstellung über eine Gewindeverstelleinheit unerlässlich.

Aus der deutschen Patentanmeldung DE 197 37 318 und der zugehörigen Zusatzanmeldung DE 197 43 855 sind Vorrichtungen zur hydraulischen Zentrierung und Stabilisierung der Geräteanbaueinrichtung für Geräte unterschiedlicher Breitenkategorien bekannt. Dazu schlägt die DE 197 37 318 eine Vorrichtung vor, bei der eine Seitenstrebe einen zweistufigen Hydraulikzylinder und die andere Seitenstrebe einen einstufigen Hydraulikzylinder umfaßt. In Ergänzung hierzu schlägt die DE 197 43 855 eine Vorrichtung vor, bei der beide Seitenstreben jeweils einen zweistufigen Hydraulikzylinder umfassen. Gemeinsam ist beiden Patentanmeldungen, daß jede Seitenstrebe auch eine drucklos frei verstellbare Teleskopeinrichtung umfassen muß, damit ein ausreichender Freigang eines angebauten Gerätes erreicht werden kann. Aufgrund dieser drucklosen inneren Teleskopstufe können die Seitenstreben nicht durch eine hydraulische Ansteuerung auf ihre Maximallänge ausgefahren werden. Die Maximallänge der Seitenstreben kann nur dadurch erreicht werden, daß auf das frei bewegliche Ende der Teleskopverstellung eine äußere Zugkraft aufgebracht wird. Dementsprechend kann der jeweilige Unterlenker auch nicht bis zu der durch die Maximallänge der zugeordneten Seitenstrebe begrenzte, am weitesten nach innen zur Schlepperlängsachse hin liegenden Position verschwenkt werden, was wiederum zu Schwierigkeiten oder einem erhöhten Rangieraufwand beim Ankuppeln unterschiedlicher Geräte führt.

Aufgabe der vorliegenden Erfindung ist es, eine konstruktiv einfache, preiswert herzustellende und leicht handhabbare Vorrichtung der eingangs genannten Art zu schaffen, die ohne manuelle Justiervorgänge die automatische Mittenzentrierung eines angebauten Gerätes zur Schlepperlängsachse bei einer einfachen Stabilisierungsmöglichkeit dieser zentrierten Position gewährleistet, und die einen hohen Komfort beim Ankuppeln unterschiedlicher Geräte durch eine vollständig hydraulisch steuerbare Verschwenkbarkeit der Unterlenker über den gesamten, durch die Differenzlängen der Seitenstreben vorgegebenen Winkelbereich erlaubt.

Diese Aufgabe wird erfindungsgemäß durch eine Vorrichtung nach Anspruch 1 gelöst. Wesentlich ist dabei, daß jeder Hydraulikzylinder mit einer äußeren Stufe und mindestens einer inneren bzw. mittleren Stufe mehrstufig ausgeführt ist, daß der Gesamthub des Hydraulikzylinders gleich der Differenzlänge der jeweiligen Seitenstrebe ist und daß die Stufen der Hydraulikzylinder derart ausgebildet sind, daß bei jeweils vollständig ausgefahrener äußerer Stufe und bei jeweils vollständig eingefahrener innerer Stufe und bei vollständig eingefahrenen ggf. vorhandenen mittleren Stufen der Abstand zwischen den freien Enden der beiden Unterlenker einer ersten Standardbreite anzubauender Geräte entspricht.

Der Hauptvorteil besteht dabei darin, daß bei Druckbeaufschlagung der beiden Hydraulikzylinder durch eine gemeinsame Druckquelle ein angebautes Gerät automatisch in eine zur Längsachse des Schleppers absolut zentrierte Mittenposition gebracht werden kann und bei Absperrung der Druckquelle auf besonders einfache Weise eine Stabilisierung dieser Mittenstellung erreicht wird. Die Hydraulikflüssigkeit kann dabei trotz der leitungsmäßigen Verbindung der beiden Hydraulikzylinder nicht frei vom einen zum anderen Zylinder strömen, da das hierbei aus einem Hydraulikzylinder herausgedrückte Flüssigkeitsvolumen größer ist, als das Volumen was von dem anderen Hydraulikzylinder aufgenommen werden könnte. Zusätzliche Absperrventile für jeden Zylinder oder für die Verbindungsleitung sind dabei für diese Funktionen nicht erforderlich.

Ein weiterer wesentlicher Vorteil besteht darin, daß beide Unterlenker auch unabhängig voneinander und lediglich durch Variierung der Druckbeaufschlagung des jeweiligen Hydraulikzylinders mit Hydraulikflüssigkeit in jede beliebige Position ihres vollständigen Schwenkbereiches gebracht werden können. Dadurch wird insbesondere das Ankuppeln eines Gerätes erheblich vereinfacht, da eine mittige Ausrichtung des Schleppers zu dem auf dem Boden stehenden Gerät nicht erforderlich ist.

Die erfindungsgemäße Vorrichtung zeichnet sich somit bei einfacher Bauweise, kostengünstiger Herstellbarkeit und großer Sicherheit insbesondere durch einen hohen Bedienungskomfort für den Fahrer des Schleppers aus.

Ein besonders günstiges Verhältnis zwischen einer vielseitigen Einsetzbarkeit und einer preiswerten Herstellbarkeit ergibt sich dann, wenn die Hydraulikzylinder zweistufig oder dreistufig ausgeführt sind.

Die Hydraulikzylinder können vorzugsweise als Plungerzylinder oder als einfach wirkende Druckzylinder ausgeführt sind. Es können aber auch andere Zylinderbauformen, insbesondere auch doppeltwirkende Zylinder verwendet werden.

Besonders vorteilhaft ist es, wenn das elastische Rückstellelement durch eine Zugfeder gebildet ist, die innerhalb des mehrstufigen Hydraulikzylinders angeordnet ist. Auf diese Weise ist die Feder insbesondere nicht äußeren Einflüssen wie Verschmutzungen oder Beschädigungsgefahren ausgesetzt und es wird eine platzsparende Ausführung erreicht. Vorzugsweise kann die Zugfeder dabei zwischen der innersten Zylinderstufe und dem Boden des Hydraulikzylinders wirksam sein.

Gemäß einer besonders bevorzugten Ausführungsform der Erfindung sind die Hydraulikzylinder mit einer inneren Stufe und einer mittleren Stufe und einer äußeren Stufe dreistufig ausgeführt, wobei die Stufen der Hydraulikzylinder derart ausgebildet sind, daß bei jeweils vollständig ausgefahrener äußerer Stufe und bei jeweils vollständig eingefahrener mittlerer Stufe und vollständig eingefahrener innerer Stufe der Abstand zwischen den freien Enden der beiden Unterlenker einer ersten Standardbreite verschiedener anzubauender Geräte entspricht, und daß bei jeweils vollständig ausgefahrener äußerer Stufe und vollständig ausgefahrener mittlerer Stufe und bei jeweils vollständig eingefahrener innerer Stufe der Abstand zwischen den freien Enden der beiden Unterlenker einer zweiten Standardbreite verschiedener anzubauender Geräte entspricht, die geringer ist, als die erste Standardbreite. Dadurch können bei einer Druckbeaufschlagung der beiden Hydraulikzylinder durch eine gemeinsame Druckquelle angebaute Geräte von zwei unterschiedlichen Kategoriebreiten automatisch in eine zur Längsachse des Schleppers absolut zentrierte Mittenposition gebracht werden, ohne daß hierfür irgendwelche manuellen Justierungs- oder Längenverstellarbeiten erforderlich sind. Ebenso kann auch hierbei unabhängig von der angekuppelten Kategoriebreite bei Absperrung der Druckquelle auf besonders einfache Weise eine Stabilisierung der Mittenstellung erreicht werden. Die Hydraulikflüssigkeit kann auch bei dieser Ausführungsform trotz der leitungsmäßigen Verbindung der beiden Hydraulikzylinder nicht frei vom einen zum anderen Zylinder strömen, da das hierbei von der jeweils nächsten Zylinderstufe aus einem Hydraulikzylinder herausgedrückte Flüssigkeitsvolumen größer ist, als das Volumen was von dem anderen Hydraulikzylinder aufgenommen werden könnte. Zusätzliche Absperrventile sind dabei für diese Funktionen auch hierbei nicht erforderlich. Falls jedoch nur Geräte einer einzigen Kategoriebreite verwendet werden sollen, kann aus Kostengründen auf die einfacheren und preiswerteren zweistufigen Zylinder zurückgegriffen werden.

Im Sinne möglichst geringer Herstellungskosten und einer möglichst einfachen Montierbarkeit ist es besonders günstig, wenn beide Hydraulikzylinder baugleich ausgeführt sind. Unterschiedliche Ausführungsformen sind für die Funktionen der erfindungsgemäßen Vorrichtung nicht erforderlich.

Besonders vorteilhaft ist es, wenn eine hydraulische Schaltungsanordnung vorgesehen ist, mit der beide Hydraulikzylinder gleichzeitig mit einer gemeinsamen Druckquelle leitungsmäßig verbindbar sind. Auf diese Weise kann besonders schnell und einfach eine zur Schlepperlängsachse absolut zentrierte Ausrichtung eines angebauten Gerätes erreicht werden.

Eine besonders einfache Stabilisierung der Mittenposition kann dann erreicht werden, wenn eine Schaltungsanordnung vorgesehen ist, mit der beide Hydraulikzylinder über eine Verbindungsleitung leitungsmäßig miteinander verbindbar sind, wobei die Hydraulikzylinder und die Verbindungsleitung von Druckquellen und Drucksenken absperrbar sind. Wie bereits ausgeführt kann die Hydraulikflüssigkeit dabei trotz der leitungsmäßigen Verbindung der beiden Hydraulikzylinder nicht frei vom einen zum anderen Zylinder strömen, so daß das angebaute Gerät in der zentrierten Position festgestellt bzw. stabilisiert bleibt. Im Gegensatz zu den aus der AT 272721 oder aus der DE 195 37 555 bekannten Vorrichtungen sind dabei keine zusätzlichen Absperrventile erforderlich.

Besonders vorteilhaft ist es ferner, wenn eine Schaltungsanordnung vorgesehen ist, mit der jeder Hydraulikzylinder einzeln leitungsmäßig mit einer Druckquelle, insbesondere mit einer gemeinsamen Druckquelle, verbindbar ist. Auf diese Weise ist sowohl eine gezielte Verschwenkung jedes einzelnen Unterlenkers unabhängig von dem zweiten Unterlenker möglich, so daß insbesondere das Ankuppeln eines Gerätes von einer einzigen Person vom Schleppersitz aus durchgeführt werden kann. Außerdem ist es auch möglich, ein angekuppeltes Gerät in beliebige Seitenlagen zu verschwenken.

Der Komfort beim Ankuppeln eines Gerätes kann weiterhin dadurch erhöht werden, daß eine Schaltungsanordnung vorgesehen ist, mit der jeder Hydraulikzylinder einzeln absperrbar ist. Auch ist hierdurch besonders einfach eine Stabilisierung bzw. Verriegelung einer gewünschten Seitenlage eines angebauten Gerätes möglich. Eine besonders dichte Absperrung der Hydraulikzylinder kann dabei durch die Verwendung von Sitzventilen erreicht werden.

Vorzugsweise ist eine Schaltungsanordnung vorzusehen, mit der beide Hydraulikzylinder einzeln oder gemeinsam mit einer Drucksenke bzw. mit dem Hydraulikflüssigkeitstank des Schleppers leitungsmäßig verbindbar sind.

Für eine besonders einfache und komfortable Steuerung der erfindungsgemäßen Vorrichtung bzw. der Schaltungsanordnung wird vorgeschlagen, daß die Ventile der Schaltungsanordnung elektromagnetisch betätigbar sind.

Vorzugsweise kann dabei insbesondere im Bereich des Fahrersitzes des Schleppers eine Fernsteuerungseinrichtung vorgesehen sein, mit der die Ventile der Schaltungsanordnung steuerbar sind.

Besonders vorteilhaft ist es außerdem, wenn Sensoren zur Erfassung der vertikalen und/oder horizontalen Position der Geräteanbaueinrichtung des Schleppers vorgesehen sind, die Signale an eine Steuereinheit zur Steuerung der Schaltungsanordnung oder an eine Anzeigevorrichtung übermitteln.

Vorteilhafterweise kann die Druckquelle bzw. die Druckquellen mit einer Druckbegrenzungseinrichtung versehen sein.

Ferner können die Hydraulikzylinder vorteilhafterweise mit einer gemeinsamen oder jeweils mit einer separaten Durchflußbegrenzungseinrichtung, insbesondere mit einem Stromregelventil versehen sein. Dadurch kann die Ein- und Ausfahrgeschwindigkeit der Zylinder und somit die Schwenkgeschwindigkeit der Unterlenker variabel eingestellt, insbesondere beschränkt werden.

Weitere Vorteile und Merkmale der Erfindung ergeben sich aus der nachfolgenden Beschreibung und den in den Zeichnungen dargestellten Ausführungsbeispielen.

Es zeigen:
- Figur 1:: Schematische Darstellung einer erfindungsgemäßen Vorrichtung mit einem angebauten Gerät einer größeren Kategoriebreite, mit einer hydraulischen Schaltungsanordnung, die sich in einer Stellung befindet, bei der eine Mittenzentrierung des Gerätes herbeigeführt wird,
- Figur 2:: Schematische Darstellung der Vorrichtung und der Schaltungsanordnung aus Figur 1 mit einem angebauten Gerät einer kleineren Kategoriebreite, wobei ebenfalls eine Mittenzentrierung des Gerätes herbeigeführt wird,
- Figur 3:: Schematische Darstellung der Vorrichtung aus Figur 1 mit einem angebauten Gerät und mit einer zweiten hydraulischen Schaltungsanordnung, die sich in einer Stellung befindet, bei der die mittenzentrierte Position des Gerätes stabilisiert ist,
- Figur 4:: Schematische Darstellung der Vorrichtung und der Schaltungsanordnung aus Figur 1 mit einem angebauten Gerät, wobei sich die Schaltungsanordnung in einer Stellung befindet, bei der das Gerät im Freigang frei hin und her schwenken kann,
- Figur 5:: Schematische Darstellung der Vorrichtung und der Schaltungsanordnung aus Figur 1 mit einem angebauten Gerät, wobei sich die Schaltungsanordnung in einer Stellung befindet, bei der das Gerät auf eine Seite verschwenkt wird,
- Figur 6:: Schematische Darstellung der Vorrichtung und der Schaltungsanordnung aus Figur 1 ohne angebautes Gerät, wobei sich die Schaltungsanordnung in einer Stellung befindet, bei der beide Unterlenker einzeln verschwenkbar oder verriegelbar sind, und
- Figur 7:: Schematische Darstellung der Vorrichtung aus Figur 1 mit einem angebauten Gerät und mit einer dritten hydraulischen Schaltungsanordnung, die sich in einer Stellung befindet, bei der eine Mittenzentrierung des Gerätes herbeigeführt wird.

Die in allen Figuren dargestellte Vorrichtung dient zur elektro-hydraulischen Steuerung der beiden Unterlenker 1 einer Dreipunkt-Geräteanbauein richtung, die unmittelbar oder über eine Montagevorrichtung mittelbar am Heck eines nicht näher dargestellten Schleppers angeordnet ist. Sie umfaßt zwei Seitenstreben 2, die jeweils einem Unterlenker 1 zugeordnet sind, der über einen Schwenkbereich S schwenkbar ist. Beide Seitenstreben 2 bestehen im wesentlichen jeweils aus einem einfach wirkenden Hydraulikzylinder 3, der als dreistufiger Teleskopzylinder ausgeführt ist. Beide Hydraulikzylinder 3 sind baugleich als Plungerzylinder ausgebildet und weisen jeweils eine Zugfeder 4 auf, die als elastisches Rückstellelement innerhalb des Hydraulikzylinders 3 angeordnet ist. Die Zugfeder 4 erstreckt sich dabei zwischen der inneren Stufe 5 und dem Boden des Hydraulikzylinders 3.

Die Hydraulikzylinder 3 umfassen jeweils eine innere Stufe 5, die in einer mittleren Stufe 6 gelagert ist. Die mittlere Stufe 6 ist wiederum in einer äußeren Stufe 7 gelagert. Die äußere Stufe 7 ist schließlich in dem Gehäuse 8 des Hydraulikzylinders 3 gelagert.

Aufgrund der Teleskopausführung der Hydraulikzylinder 3 kann die Länge der Seitenstreben 2 über eine relativ große Differenzlänge variiert werden, wodurch ein großer Schwenkbereich S der Unterlenker 1 erreicht wird. Der Schwenkbereich S erstreckt sich dabei von einem relativ geringen Abstand von den Hinterrädern 9 des Schleppers bis fast zur Längsachse 10 des Schleppers.

Beide Seitenstreben 2 können in ihrer Länge jeweils von einer durch die inneren Anschläge 11 der einzelnen Zylinderstufen 5, 6, 7 begrenzten Minimallänge L1 bis zu einer durch die äußeren Anschläge 12 der Zylinderstufen 5, 6, 7 begrenzten Maximallänge L2 über eine Differenzlänge verändert werden. Diese Differenzlänge L2-L1 ist erfindungsgemäß identisch mit dem Gesamthub eines Hydraulikzylinders 3.

Erfindungsgemäß sind die Stufen 5, 6, 7 der Hydraulikzylinder 3 derart ausgebildet, daß bei jeweils vollständig ausgefahrener äußerer Stufe 7 und bei jeweils vollständig eingefahrener mittlerer Stufe 6 und vollständig eingefahrener innerer Stufe 5 der Abstand A3 zwischen den freien Enden der beiden Unterlenker 1 einer größeren Standardbreite K3 verschiedener anzubauender Geräte G entspricht. Die standardisierte Breite K3 weisen verschiedene Anbaugeräte der sogenannten Kategorie 3 auf. Die Anpassung des Abstandes A3 an die Standardbreite K3 erlaubt die automatische und spielfreie Mittenzentrierung eines angebauten Gerätes G und die einfache Blockierung der Unterlenker 1 bzw. die damit einhergehende einfache Stabilisierung des angebauten Gerätes G, ohne daß hierfür manuelle Einstellarbeiten erforderlich sind.

In dem in den Figuren dargestellten Ausführungsbeispiel der Erfindung sind die Stufen 5, 6, 7 der Hydraulikzylinder 3 außerdem auch derart ausgebildet, daß bei jeweils vollständig ausgefahrener äußerer Stufe 7 und vollständig ausgefahrener mittlerer Stufe 6 und bei jeweils vollständig eingefahrener innerer Stufe 5 der Abstand A2 zwischen den freien Enden der beiden Unterlenker 1 einer kleineren Standardbreite K2 anderer anzubauender Geräte entspricht. Die ebenfalls standardisierte Breite K2, die geringer ist als die erste Standardbreite K3, weisen verschiedene Anbaugeräte der sogenannten Kategorie 2 auf. Auf diese Weise können Geräte G zweier unterschiedlicher Breitenkategorien einfach und schnell angekuppelt und automatisch spielfrei mittenzentriert werden, wobei auch bei einem Kategoriewechsel keine manuellen Verstellungen oder Einstellarbeiten vorgenommen werden müssen.

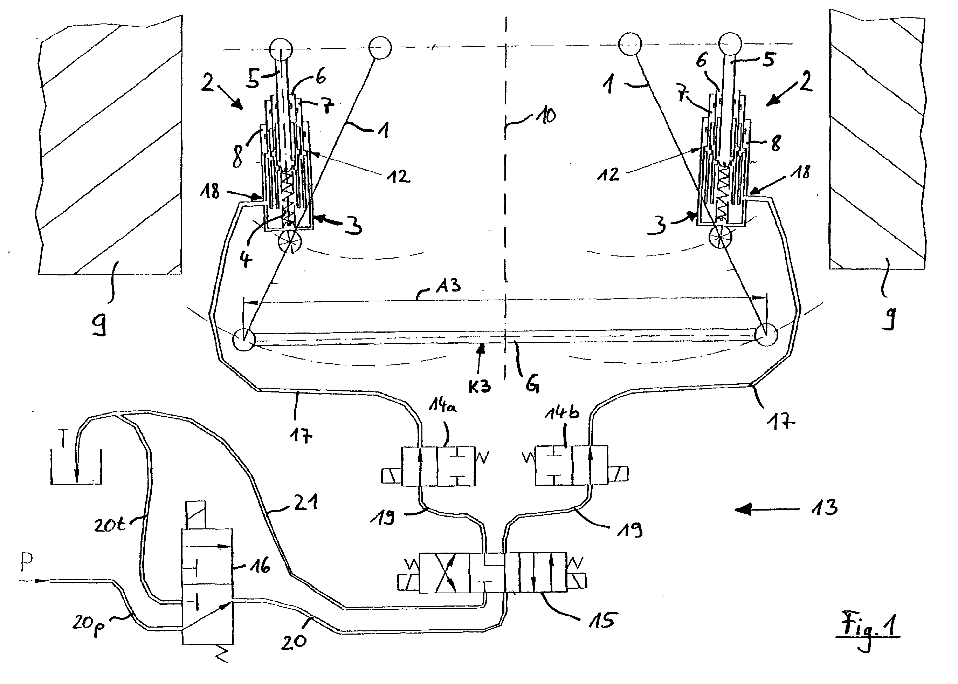

Die in den Figuren 1, 2, 4, 5 und 6 dargestellte hydraulische Schaltungsanordnung 13 umfaßt insgesamt vier elektromagnetisch betätigbare Ventile 14a, 14b, 15 und 16. Während die Ventile 14a und 14b bei den in den Zeichnungen dargestellten Anordnungen in Leitungen 17 angeordnet sind, können sie in alternativen Ausführungsformen vorteilhafterweise auch direkt an den Druckmittelanschlüssen 18 der Hydraulikzylindern 3 angeordnet sein. Auf diese Weise kann einerseits die Herstellung eines relativ aufwendigen Steuerblocks vermieden werden und andererseits kann auch bei einem Bruch der Leitungen 17 eine Stabilisierung bzw. Verriegelung der Unterlenker 1 in ihrer jeweiligen Position erreicht werden wenn die Ventile 14a und/oder 14b gesperrt werden.

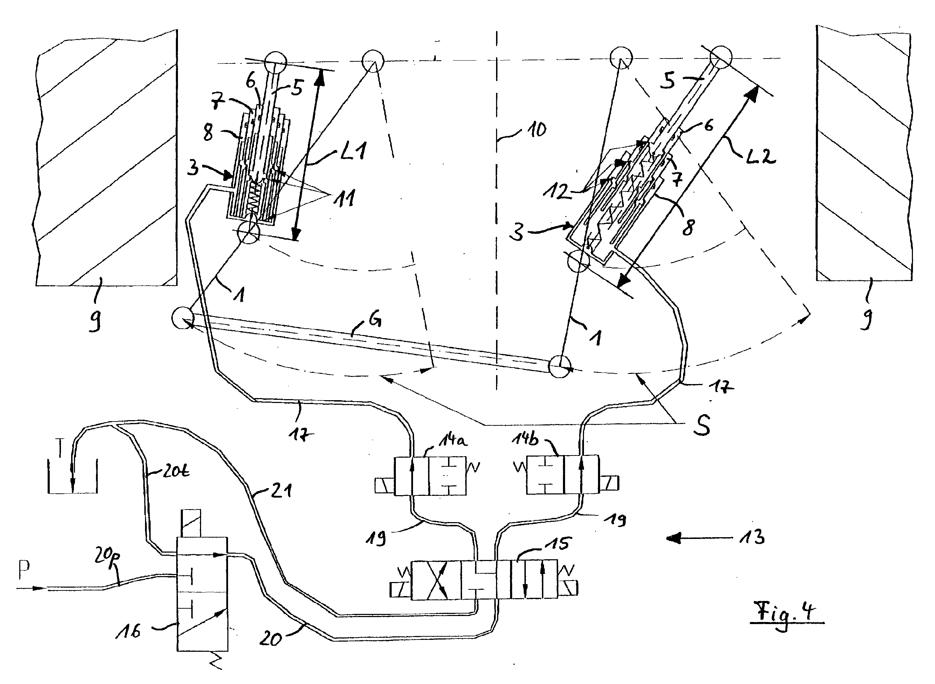

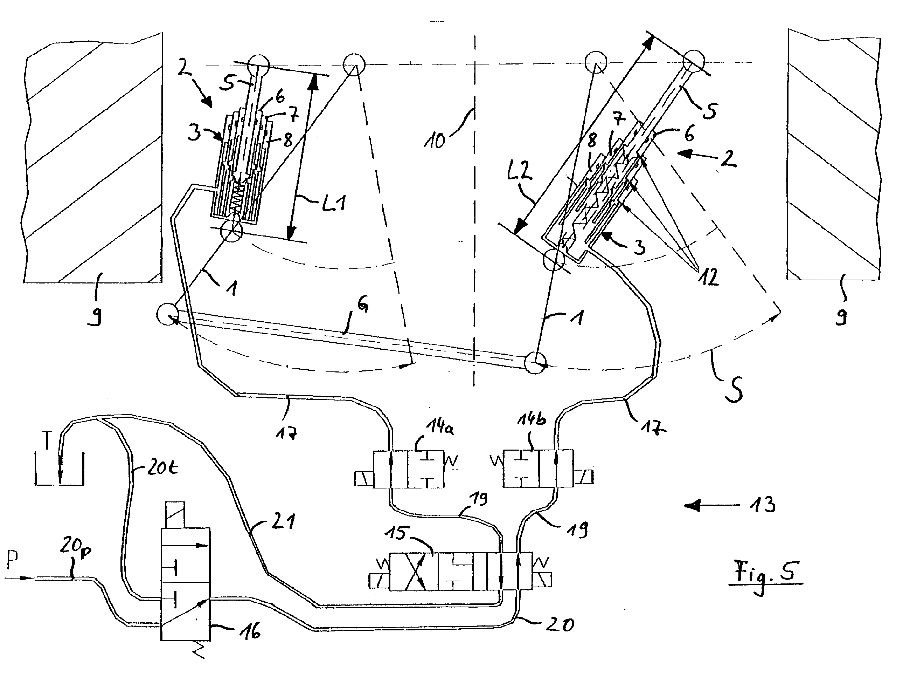

Die beiden Hydraulikzylinder 3 sind leitungsmäßig über die Leitungen 17 jeweils mit einem Absperrventil 14a bzw. 14b verbunden. Jedes Ventil 14a bzw. 14b ermöglicht in einer ersten Schaltstellung die Verbindung zu der durch eine Pumpe P des Schleppers gebildeten Druckquelle zum Ausfahren des jeweilgen Hydraulikzylinders 3 (Figur 1 und Figur 2) oder zu der durch den Tank T der Hydraulikflüssigkeit gebildeten Drucksenke zum Einfahren des jeweilgen Hydraulikzylinders 3 (Figur 4). In der zweiten Schaltstellung ermöglicht jedes Ventil 14a bzw. 14b eine Absperrung des jeweiligen Hydraulikzylinders 3 zur Verriegelung der jeweiligen Seitenstrebe 2 bzw. zur Stabilisierung eines angebauten Gerätes G (Ventil 14a in Figur 6). Die Ventile 14a und 14b sind als Sitzventile ausgeführt, wodurch eine besonders hohe Dichtheit und somit eine besonders sichere Stabilisierung bzw. Verriegelung erreichbar ist. Die Ventile 14a und 14b sind so geschaltet, daß sie stromlos geschlossen sind, da dieser Betriebszustand meistens benutzt wird.

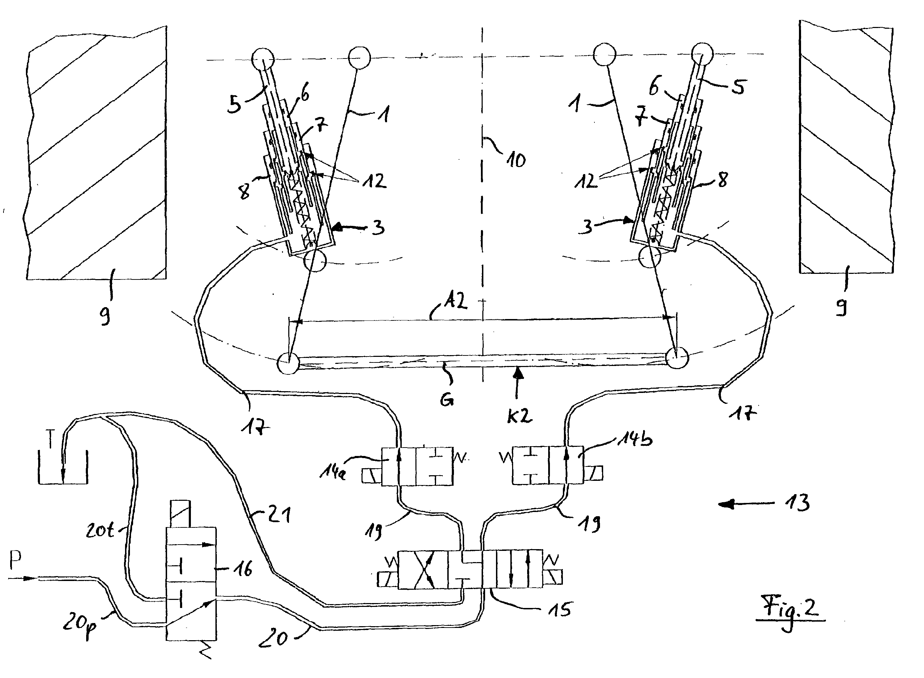

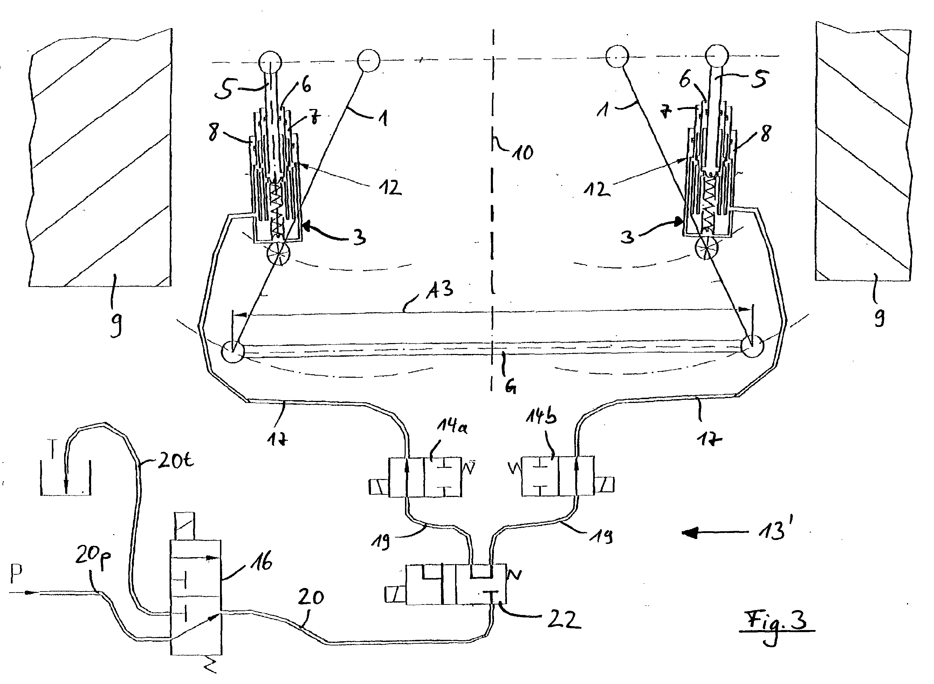

Die beiden Ventile 14a und 14b sind über die Leitungen 19 jeweils mit einem Anschluß eines Ventils 15 verbunden, das als 4/3-Wegeventil ausgeführt ist. Das Ventil 15 dient als Steuerventil der Steuerung der Vorrichtung und ist so geschaltet, daß im stromlosen Zustand die beiden Hydraulikzylinder 3 sowohl miteinander als auch mit der Pumpe P (Figur 1 und Figur 2) oder mit dem Tank T (Figur 4) verbunden sind. Unter Stromeinwirkung wird jeweils ein Hydraulikzylinder 3 mit der Pumpe P verbunden, während der andere Hydraulikzylinder 3 mit dem Tank T verbunden wird (Figur 5). So kann die Geräteanbaueinrichtung bei gleichzeitiger Öffnung der Ventile 14a und 14b seitlich verschwenkt werden.

Ein dritter Anschluß des Ventils 15 ist über eine Leitung 20 mit dem Ventil 16 verbunden, das als 3/2-Wegeventil ausgeführt ist. Das Ventil 16 dient als Vorwahlventil, um die Druckmittelversorgung durch die Pumpe P bei Bedarf zu trennen und das Ventil 15 dabei mit dem Tank T zu verbinden (Figur 4). Das Ventil 16 ist so geschaltet, daß das Ventil 15 im stromlosen Zustand über eine Leitung 20p mit der Pumpe P und unter Stromeinwirkung über eine Leitung 20t mit dem Tank T verbunden ist. Für eine besonders sichere Absperrung ist das Vorwahlventil 16 ebenfalls als Sitzventil ausgeführt.

Der vierte Anschluß des Ventils 15 ist über eine Leitung 21 ständig mit dem Tank T verbunden. Über diese Leitung 21 kann Hydraulikflüssigkeit aus einem Hydraulikzylinder 3 abgeführt werden, wenn der zugehörige Unterlenker 1 nach außen verschwenkt wird.

Bei der in Figur 6 gezeigten Schaltungsanordnung 13 können beide Unterlenker 1 einzeln verschwenkt oder verriegelt werden. Die Ventile 15 und 16 befinden sich hierbei im stromlosen Zustand, wobei beide Ventile 14a und 14b über das Ventil 15 mit der Pumpe P verbunden sind. Das Ventil 14a ist ebenfalls im stromlosen Zustand, so daß der linke Unterlenker 1 blockiert ist. Das Ventil 14b ist hingegen unter Stromeinwirkung geöffnet, so daß der rechte Hydraulikzylinder 3 ausfährt und der rechte Unterlenker 1 nach innen verschwenkt wird.

Bei der in Figur 3 gezeigten Schaltungsanordnung 13' fungiert ein als 3/2-Wegeventil ausgeführtes Ventil 22 als Steuerventil. In der dargestellten stromlosen Schaltstellung sind beide Hydraulikzylinder 3 leitungsmäßig miteinander verbunden. Diese leitungsmäßige Verbindung über die Leitungen 17 und 19 sowie über das Ventil 22 ist dabei sowohl von der Pumpe P als auch von dem Tank T abgesperrt. Dadurch kann eine zuvor eingestellte Position eines angebauten Gerätes G, insbesondere eine zentrierte Mittenposition, ohne weitere Druckzufuhr durch die Pumpe P stabilisiert werden, da die Hydraulikflüssigkeit trotz der leitungsmäßigen Verbindung 17, 19 aufgrund der unterschiedlichen Breiten der Zylinderstufen 5, 6, 7 nicht frei von einen zum anderen Hydraulikzylinder 3 strömen kann.

Ausgehend von der dargestellten Position, bei der lediglich-die äußere Stufe 7 vollständig ausgefahren ist, während die mittlere Stufe 6 und die innere Stufe 5 jeweils vollständig eingefahren sind, würde ein Verschwenken eines angebauten Gerätes G bzw. der Unterlenker 1 auf eine Seite bewirken, daß bei dem dortigen Hydraulikzylinder 3 die äußere Stufe 5 einfahren müßte. Bei dem anderen Hydraulikzylinder 3 müßte gleichzeitig die mittlere Stufe 6 oder die innere Stufe 5 ausfahren. Das durch das Ausfahren der mittleren Stufe 6 oder insbesondere der inneren Stufe 5 freigegebene Zylindervolumen, das für die Aufnahme von Hydraulikflüssigkeit zur Verfügung stehen würde, ist jedoch wesentlich kleiner als das Volumen, das durch das Einfahren der äußeren und somit größten Stufe 5 des anderen Hydraulikzylinders 3 verdrängt wird. Da die Hydraulikflüssigkeit aber nicht aus der nach außen abgesperrten Verbindungsleitung 17 entweichen kann, können die durch ein angebautes Gerät G miteinander verbundenen Unterlenker 1 auch nicht aus der zuvor eingestellten Position Verschwenken. Diese besonders einfache Stabilisierung kann nicht nur bei der auf die Schlepperlängsachse 10 zentrierten Mittenposition , sondern auch bei einer seitlich ausgelenkten Seitenposition vorgenommen werden. Für die Einstellbarkeit einer seitlich verschwenkten Position müßte das Ventil 22 jedoch zusätzlich auch die Steuerstellungen des Ventils 15 aus den zuvor beschriebenen Figuren 1, 2 und 4 bis 6 ausführen können.

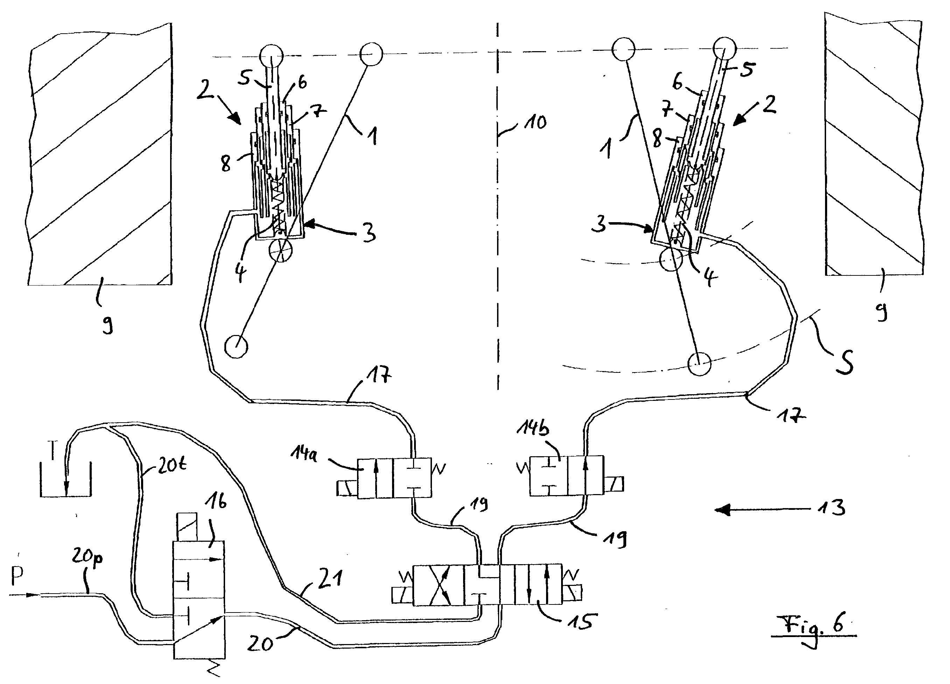

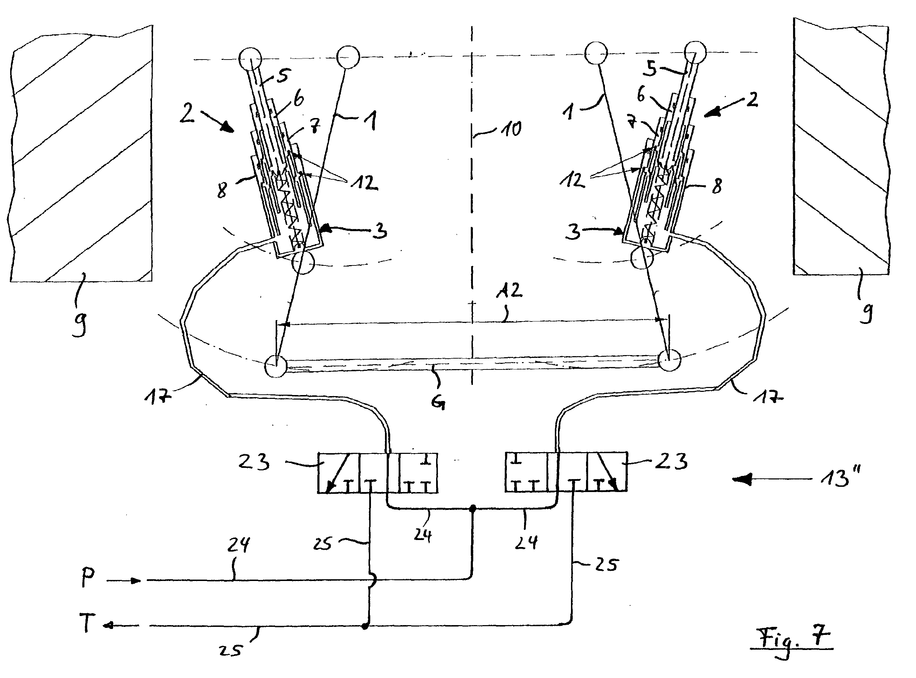

Bei der in Figur 7 dargestellten dritten Variante der erfindungsgemäßen Vorrichtung können ebenfalls alle zuvor beschriebenen Funktionen ausgeführt werden. Diese Schaltungsanordnung 13" benötigt hierzu jedoch lediglich zwei baugleiche Ventile 23. Die Ventile 23 sind bei dem gezeigten Ausführungsbeispiel als 3/3-Wegeventile ausgeführt, wobei ein erster Ventilanschluß jeweils mit den Leitungen 17 und darüber mit den Hydraulikzylindern 3 verbunden ist. Die zweiten und dritten Ventilanschlüsse sind über Leitungen 24 und 25 jeweils leitungsmäßig miteinander verbunden. Zusätzlich ist eine Vebindungsleitung 24 auch mit der Pumpe P und die andere Verbindungsleitung 25 auch mit dem Tank T verbunden.

Die Ventile 23 sind derart ausgeführt, daß in einer ersten Schaltstellung alle Ventilanschlüsse abgesperrt sind, wodurch eine Stabilisierung bzw. Blockierung der jeweils eingestellten Positionen eines angebauten Gerätes G bzw. der Unterlenker 1 erreicht wird. Bei einer zweiten Schaltstellung des Ventils 23 ist der erste Ventilanschluß über den zweiten Ventilanschluß mit der Verbindungsleitung 24 und somit mit der Pumpe P verbunden, wobei der dritte Ventilanschluß abgesperrt bleibt. Bei der dritten Schaltstellung des Ventils 23 ist der erste Ventilanschluß über den dritten Ventilanschluß mit der Verbindungsleitung 25 und somit mit dem Tank T verbunden, wobei der zweite Ventilanschluß abgesperrt bleibt. Zusätzlich kann in der zur Pumpe P führenden Leitung 24 noch ein Absperrventil angeordnet werden, um die einfache Möglichkeit der Stabilisierung gemäß Figur 3 schalten zu können.

Alle Ventile 14a, 14b, 15, 16, 22 und 23 können als elektromagnetische Ventile von einer einzigen Steuereinheit gesteuert werden. Dazu kann die Steuereinheit auch über Sensoren Informationen über die vertikale Höhenposition und/oder über die horizontale Seitenposition eines oder beider Unterlenker 1 und/oder des in den Zeichnungen nicht näher dargestellten Oberlenkers der Dreipunkt-Geräteanbaueinrichtung erhalten.

### Bezugszeichenliste

- 1: Unterlenker
- 2: Seitenstrebe
- 3: Hydraulikzylinder
- 4: Zugfeder
- 5: innere Stufe
- 6: mittlere Stufe
- 7: äußere Stufe
- 8: Gehäuse
- 9: Hinterrad
- 10: Längsachse
- 11: innere Anschläge
- 12: äußere Anschläge
- 13: Schaltungsanordnung
- 14: Ventil (Absperrventile 14a und 14b)
- 15: Ventil (4/3-Wege-Steuerventil)
- 16: Ventil (3/2-Wege-Vorwahlventil)
- 17: Leitung
- 18: Druckmittelanschluß
- 19: Leitung
- 20: Leitung
- 20p: Leitung
- 20t: Leitung
- 21: Leitung
- 22: Ventil (3/2-Wege-Steuerventil)
- 23: Ventil (3/3-Wege-Stuerventil)
- 24: Leitung
- 25: Leitung
- G: Gerät
- L1: Minimallänge
- L2: Maximallänge
- A2: kleinerer Abstand
- A3: größerer Abstand
- K2: kleinere Standardbreite
- K3: größere Standardbreite
- P: Pumpe
- T: Tank

## Patentansprüche

1. Vorrichtung zur hydraulischen Steuerung der beiden Unterlenker einer Geräteanbaueinrichtung eines Fahrzeugs, insbesondere eines Schleppers, umfassend zwei jeweils einem Unterlenker zugeordnete Seitenstreben, die jeweils von einer durch einen ersten Anschlag begrenzten Minimallänge bis zu einer durch einen zweiten Anschlag begrenzten Maximallänge über eine Differenzlänge längenveränderbar sind, wobei jede Seitenstrebe einen Hydraulikzylinder und ein elastisches Rückstellelement aufweist,
**dadurch gekennzeichnet,**
**daß** jeder Hydraulikzylinder (3) mit einer äußeren Stufe (7) und mindestens einer inneren bzw. mittleren Stufe (5, 6) mehrstufig ausgeführt ist,
**daß** der Gesamthub des Hydraulikzylinders (3) gleich der Differenzlänge der jeweiligen Seitenstrebe (2) ist,
und **daß** die Stufen (5, 6, 7) der Hydraulikzylinder (3) derart ausgebildet sind, daß bei jeweils vollständig ausgefahrener äußerer Stufe (7) und bei jeweils vollständig eingefahrener innerer Stufe (5) und bei vollständig eingefahrenen gegebenenfalls vorhandener mittlerer Stufen (6) der Abstand (A3) zwischen den freien Enden der beiden Unterlenker (1) einer ersten Standardbreite (K3) verschiedener anzubauender Geräte (G) entspricht.

2. Vorrichtung nach Anspruch 1, **dadurch gekennzeichnet, daß** die Hydraulikzylinder (3) zweistufig oder dreistufig ausgeführt sind.

3. Vorrichtung nach Anspruch 1 oder 2, **dadurch gekennzeichnet, daß** die Hydraulikzylinder (3) als Plungerzylinder oder als einfach wirkende Druckzylinder ausgeführt sind.

4. Vorrichtung nach einem der vorherigen Ansprüche, **dadurch gekennzeichnet, daß** das elastische Rückstellelement (4) durch eine Zugfeder gebildet ist, die innerhalb des mehrstufigen Hydraulikzylinders (3) angeordnet ist.

5. Vorrichtung nach Anspruch 4, **dadurch gekennzeichnet, daß** die Zugfeder (4) zwischen der innersten Stufe (5) und dem Boden des Hydraulikzylinders (3) wirksam ist.

6. Vorrichtung nach einem der vorherigen Ansprüche, **dadurch gekennzeichnet, daß** die Hydraulikzylinder (3) mit einer inneren Stufe (5) und einer mittleren Stufe (6) und einer äußeren Stufe (7) dreistufig ausgeführt sind und die Stufen (5, 6, 7) der Hydraulikzylinder (3) derart ausgebildet sind, daß bei jeweils vollständig ausgefahrener äußerer Stufe (7) und bei jeweils vollständig eingefahrener mittlerer Stufe (6) und vollständig eingefahrener innerer Stufe (5) der Abstand (A3) zwischen den freien Enden der beiden Unterlenker (1) einer ersten Standardbreite (K3) verschiedener anzubauender Geräte (G) entspricht, und daß bei jeweils vollständig ausgefahrener äußerer Stufe (7) und vollständig ausgefahrener mittlerer Stufe (6) und bei jeweils vollständig eingefahrener innerer Stufe (5) der Abstand (A2) zwischen den freien Enden der beiden Unterlenker (1) einer zweiten Standardbreite (K2) verschiedener anzubauender Geräte (G) entspricht, die geringer ist, als die erste Standardbreite (K3).

7. Vorrichtung nach einem der vorherigen Ansprüche, **dadurch gekennzeichnet, daß** eine hydraulische Schaltungsanordnung (13, 13', 13") vorgesehen ist, mit der beide Hydraulikzylinder (3) gleichzeitig mit einer gemeinsamen Druckquelle (P) leitungsmäßig verbindbar sind.

8. Vorrichtung nach Anspruch 7, **dadurch gekennzeichnet, daß** eine Schaltungsanordnung (13') vorgesehen ist, mit der beide Hydraulikzylinder (3) über eine Verbindungsleitung (17, 19) leitungsmäßig miteinander verbindbar sind, wobei die Hydraulikzylinder (3) und die Verbindungsleitung (17, 19) von Druckquellen (P) und Drucksenken (T) absperrbar sind.

9. Vorrichtung nach einem der vorherigen Ansprüche, **dadurch gekennzeichnet, daß** eine Schaltungsanordnung (13, 13', 13") vorgesehen ist, mit der jeder Hydraulikzylinder (3) einzeln leitungsmäßig mit einer Druckquelle (P), insbesondere mit einer gemeinsamen Druckquelle (P), verbindbar ist.

10. Vorrichtung nach Anspruch 9, **dadurch gekennzeichnet, daß** eine Schaltungsanordnung (13, 13', 13") vorgesehen ist, mit der jeder Hydraulikzylinder (3) einzeln, vorzugsweise mittels eines Sitzventils (14a, 14b), absperrbar ist.

11. Vorrichtung nach einem der Ansprüche 7 bis 10, **dadurch gekennzeichnet, daß** eine Schaltungsanordnung (13, 13', 13") vorgesehen ist, mit der beide Hydraulikzylinder (3) einzeln oder gemeinsam mit einer Drucksenke (T) leitungsmäßig verbindbar sind.

12. Vorrichtung nach einem der Ansprüche 7 bis 11, **dadurch gekennzeichnet, daß** Sensoren zur Erfassung der vertikalen und/oder horizontalen Position der Geräteanbaueinrichtung des Schleppers oder der Unterlenker (1) angeordnet sind, die Signale an eine Steuereinheit zur Steuerung der Schaltungsanordnung (13, 13', 13") liefern.

13. Vorrichtung nach einem der vorherigen Ansprüche, **dadurch gekennzeichnet, daß** die Hydraulikzylinder (3) mit einer gemeinsamen oder jeweils mit einer separaten Durchflußbegrenzungseinrichtung, insbesondere mit einem Stromregelventil versehen sind.

14. Vorrichtung nach einem der vorherigen Ansprüche, **dadurch gekennzeichnet, daß** sie zwei Unterlenker (1) einer Geräteanbaueinrichtung eines Schleppers umfaßt.

15. Vorrichtung nach einem der vorherigen Ansprüche, **dadurch gekennzeichnet, daß** sie eine Montagevorrichtung zur Befestigung der beiden Unterlenker (1) und der beiden Seitenstreben (2) der Geräteanbaueinrichtung an einem Fahrzeug, insbesondere am Heck eines Schleppers umfaßt.

16. Fahrzeug, insbesondere forstwirtschaftlicher- oder landwirtschaftlicher Schlepper, mit einer Geräteanbaueinrichtung zum Anbau von verschiedenen Geräten, **dadurch gekennzeichnet, daß** es eine Vorrichtung nach einem der vorherigen Ansprüche aufweist.

17. Mehrstufiger Hydraulikzylinder, **gekennzeichnet durch** die Merkmale nach einem der vorherigen Ansprüche.
